# EUROPÄISCHE PATENTSCHRIFT

(11) **EP 0 417 398 B1**
(45) Veröffentlichungstag und Bekanntmachung des Hinweises auf die Patenterteilung: **19.01.1994**
(21) Anmeldenummer: 90109792.3
(22) Anmeldetag: 23.05.1990
(51) Int. Cl.: B61F 5/52

(54) **Drehgestell für ein Schienenfahrzeug**
Bogie for railway vehicle
Bogie pour véhicule ferroviaire

(30) Priorität: 15.09.1989 DE 3930873
(43) Veröffentlichungstag der Anmeldung: 20.03.1991
(73) Patentinhaber: Eurocopter Deutschland Gesellschaft mit beschränkter Haftung, D-81611 München (DE)
(72) Erfinder: Nowak, Franz, D-8028 Taufkirchen (DE); Oefner, Walter, D-8156 Otterfing (DE); Leo, Rolf, D-8857 Wertingen (DE)
(74) Vertreter: Frick, Gerhard, Dipl.-Ing.

(56) Entgegenhaltungen:
- EP-A- 0 241 652

## Beschreibung

Die Erfindung bezieht sich auf ein Drehgestell für ein Schienenfahrzeug, nach dem Oberbegriff des Patentanspruchs 1.

Bei einem bekannten Drehgestell dieser Art (DE-PS 36 12 797),dessen Drehgestellrahmen aus einer doppel-H-förmigen, die Aufgabe der Primärfederung übernehmenden Faserverbundstruktur mit zwei, an ihren Enden die Radsatzlager abstützenden Längsträgern und mit diesen integral verbundenen, biegesteifen Querträgern besteht, ist zur Erzielung der für die Laufstabilität des Drehgestells notwendigen Schubsteifigkeit des Rahmens in Drehgestellebene, also der sog. antimetrischen Längssteifigkeit, zwischen den Querträgern in der Drehgestell-Mitte ein seitlich mit den Längsträgern verschraubtes, plattenförmiges Versteifungsteil eingesetzt, welches mit Lasteinleitungsstellen für die Längs- und Querabstützung des Wagenkastens versehen und zwischen den Lasteinleitungsstellen und den Längsträgern biegefest ausgebildet ist. Die Querträger und das mit den Längsträgern querträgerunabhängig verkoppelte, plattenförmige Versteifungsteil bilden mehrere getrennte, jeweils spezifisch belastete Kraftübertragungspfade zwischen den Längsträgern, wobei das Versteifungsteil aus Gründen einer für die Längs- und Querkraftübertragung ausreichenden Biegefestigkeit mit einstückig angeformten, als Faserverbund-Wickelkörper ausgebildeten Verstärkungsrippen versehen ist. In der praktischen Erprobung haben sich die überlegenen Laufeigenschaften eines derartigen Drehgestells bestätigt Für künftige Einsatzfälle mit wesentlich höheren Fahrgeschwindigkeiten und der hierbei geforderten hohen Laufstabilität ist es zweckmäßig, die Schubsteifigkeit des Drehgestellralmens weiter zu erhöhen.
Demgemäß ist es Aufgabe der Erfindung, auf der Basis eines Drehgestells der eingangs genannten Art die antimetrische Längssteifigkeit des Drehgestellrahmens auf fertigungstechnisch einfache, kostensparende Weise deutlich zu steigern.

Diese Aufgabe wird erfindungsgemäß durch das im Patentanspruch 1 gekennzeichnete Drehgestell gelöst.

Bei dem erfindungsgemäßen Drehgestell, bei dem das mittlere Plattenteil und die Querträger kraftübertragend zu einer einheitlichen Mittelstruktur zusammengefaßt sind und der Anschluß des Plattenteils an den Längsträgern über die in Längsträgerrichtung mit großer Stützweite auseinanderliegenden Eckverbindungen zwischen Quer- und Längsträgern erfolgt, ergibt sich nicht nur eine wesentlich höhere, konstruktive Schubsteifigkeit des Faserverbund-Drehgestellrahmens als bei einer Rahmenbauweise mit voneinander getrennt ausgebildeten und längsträgerseitig verbundenen Querträgern und Mittelplatte, sondern die Querträgerabschnitte übernehmen auch die Funktion von biegesteifigkeitserhöhenden Verstärkungsrippen für den Mittelplattenabschnitt, so daß die Mittelstruktur eine zur Übertragung der aus der Wagenkastenabstützung resultierenden Horizontalkräfte ausreichende Eigensteifigkeit besitzt, ohne daß es zu diesem Zweck besondere herstellungsmäßig aufwendiger Aussteifungen im Bereich der Mittelplatte bedarf. Das erfindungsgemäße Drehgestell verfügt trotz einfacherer Gestaltung der Faserverbundstruktur somit über eine Laufstabilität, wie sie auch für künftige, moderne Hochgeschwindigkeits-Schienenfahrzeuoe gefordert wird.

In weiterer, sowohl festigkeits- als auch fertigungsmäßig besonders bevorzugter Ausgestaltung der Erfindung ist die Faserverbund-Mittelstruktur gemäß Anspruch 2 als Integralbauteil mit sich durchgehend vom Platten- zu den Querträgerabschnitten erstreckenden Faserlagen ausgebildet.

Im Hinblick auf eine besonders hohe Verwindungsweichheit des Rahmens sind die Querträgerabschnitte der Mittelstruktur gemäß Anspruch 3 vorzugsweise als C-förmig zum jeweils anderen Querträgerabschnitt hin geöffnetes Faserverbund-Hohlprofil ausgebildet, wodurch die Torsionssteifigkeit der Mittelstruktur, im Vergleich zu im Querschnitt geschlossenen Querträgeranordnungen, deutlich reduziert und die Fertigung der Mittelstruktur weiter vereinfacht wird.

Aus Gründen einer faserverbundgerechten und lastspezifischen, nämlich insgesamt hochgradig schubsteifen und im Bereich der Querträgerabschnitte zusätzlich auch ausreichend biege-, zug- und drucksteifen Ausbildung der Mittelstruktur ist diese gemäß Anspruch 4 in besonders bevorzugter Weise aus ± 45°-Faserlagen aufgebaut, die in den Ober- und Untergurtbereichen der Querträgerabschnitte durch unidirektional in Querträgerrichtung verlaufende Faserstränge verstärkt sind.

Wie bereits erwähnt, besitzt die aus den Platten- und den Querträgerabschnitten bestehende Mittelstruktur eine so hohe Biegesteifigkeit, daß zur Übertragung der aus der Wagenkastenabstützung resultierenden Horizontalkräfte keine zusätzlichen Aussteifungen an dem mittleren Plattenabschnitt benötigt werden. Dabei besteht eine besonders günstige Anordnung der Lasteinleitungsstellen gemäß Anspruch 5 darin, daß die Lasteinleitungsstellen für die Längsabstützung des Wagenkastens im Bereich der Querträgerabschnitte und die Lasteinleitungsstellen für die Querabstützung des Wagenkastens im Bereich des Plattenabschnitts der Mittelstruktur vorgesehen sind, wobei gemäß Anspruch 6 die Lasteinleitungsstellen für die Längsabstützung vorzugsweise im Hohlprofilinneren der C-förmigen Querträgerabschnitte angeordnet sind, so daß die zur Längsabstützung verwendeten Lenker länger gestaltet werden können und deshalb die zugehörigen Elastomerlager kleinere Winkelbewegungen ausführen müssen und eine dementsprechend größere Lebensdauer besitzen.

Ein weiterer wesentlicher Aspekt der Erfindung besteht gemäß Anspruch 7 in der besonderen Gestaltung der Eckverbindung zwischen den Längsträgern und den Querträgerabschnitten derart, daß die Querträgerabschnitte mit den Längsträgern einerseits über metallische Beschläge verschraubt und andererseits durch seitlich über die Querträgerabschnitte vorstehende, die Längsträger auf der Ober- und Unterseite umgreifende Wandabschnitte formschlüssig verbunden sind. Hierdurch wird eine doppelt, nämlich zum einen über die Verschraubungen und zum anderen formschlüssig gesicherte Verkoppelung erzielt und gleichzeitig der Bauaufwand gegenüber einer homogenen Faserverbund-Eckverbindung wesentlich verringert.

Gemäß Anspruch 8 ist der Plattenabschnitt der Mittelstruktur des Faserverbund-Rahmens vorzugsweise horizontal im wesentlichen in Höhe der neutralen Biegelinie der Längsträger angeordnet, so daß die Mittelstruktur trotz der hochgradigen Schubversteifung des Rahmens in Horizontalebene weitgehend ohne Einfluß auf die vertikale, für die Primärfederwirkung des Rahmens maßgebliche, sich in Längsrichtung definiert ändernde Biegeelastizität der Längsträger ist und von den an den Längsträgern im Bereich der Radsatzlager und etwa in der Längsträgermitte am Wagenkastenabstützpunkt angreifenden Vertikallasten entkoppelt wird.

Gemäß den Ansprüchen 9 und 10 schließlich sind die Querträgerabschnitte der Mittelstruktur in ihren längsträgerseitigen Endbereichen vorzugsweise torsionssteif als im Querschnitt geschlossenes Hohlprofil ausgebildet und mit Bremsträgern für die Scheibenbremsvorrichtungen versehen, wodurch eine für die Aufnahme der aus den Bremskräften resultierenden Torsionsmomente besonders bau- und belastungsgünstige Ausgestaltung der Querträgerabschnitte bei zugleich großer Verwindungsweichheit der Mittelstruktur im Bereich zwischen den Bremsträger-Befestigungsstellen erzielt wird.

Ein Ausführungsbeispiel der Erfindung wird anhand der Zeichnungen näher erläutert. Es zeigt in schematischer Darstellung:
- Fig. 1: die Aufsicht eines Schienenfahrzeug-Drehgestells;
- Fig. 2: einen Teilschnitt längs der Linie II-II der Fig. 1;
- Fig. 3: einen Teilschnitt längs der Linie III-III der Fig. 2.

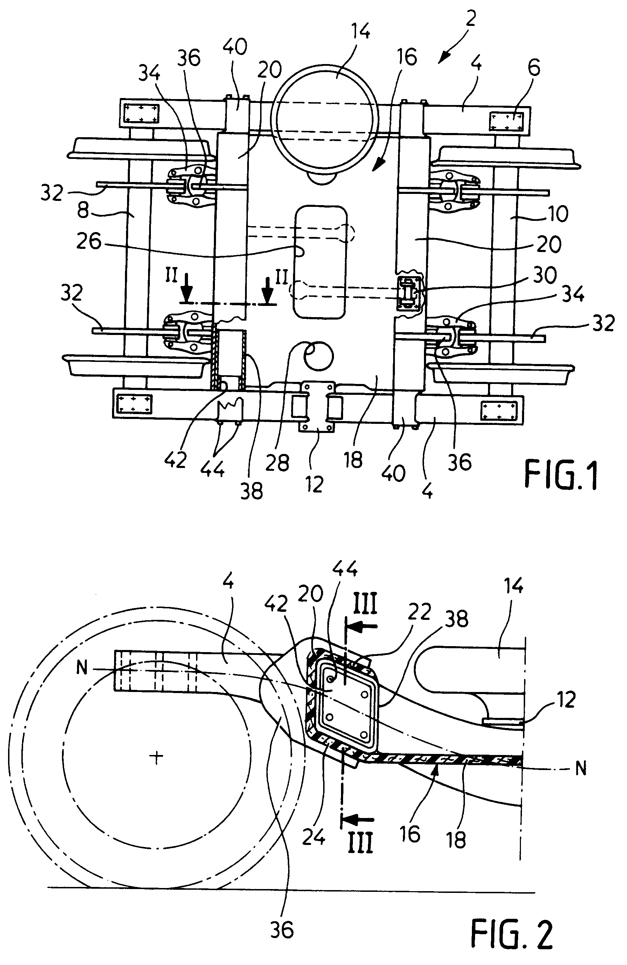

Das in den Fig. gezeigte Drehgestell enthält einen Doppel-H-Drehgestellrahmen 2 in Form einer Faserverbundstruktur, die außer den Trag- und Führungsaufgaben auch die Aufgabe der Primärfederung übernimmt, mit zwei Längsträgern 4, die ein definiertes, sich in Längsrichtung änderndes Elastizitätsverhalten senkrecht zur Drehgestellebene, also zur Zeichenebene der Fig. 1 aufweisen und an deren relativ elastisch ausgebildeten Endabschnitten die Radsatzlager 6 für den vorderen bzw hinteren Radsatz 8 bzw. 10 des Drehgestells angeordnet sind. Entsprechend der sich verringernden Biegeelastizität nimmt die Bauhöhe jedes Längsträgers 4 zur Längsträgermitte hin, wo sich der Abstützpunkt in Form einer Stützplatte 12 und einer Luftfeder 14 für die senkrechte Wagenabstützung befindet, stetig zu. Die Längsträger 4 sind miteinander durch eine symmetrisch zur Drehgestellmitte ausgebildete Mittelstruktur 16 verkoppelt, die ein Integralbauteil aus Faserverbundwerkstoff ist, welches aus einem mittleren Plattenabschnitt 18 und einstückig an diesen angeformten, vorderen und hinteren, jeweils radnahen Querträgerabschnitten 20 besteht.

Die Querträgerabschnitte 20 sind jeweils als C-förmig zum mittleren Plattenabschnitt 18 hin geöffnetes Hohlprofil ausgebildet, und die Mittelstruktur 16 ist durchgehend aus ± 45°-Faserlagen aufgebaut, die in den Ober- und Untergurtbereichen 22, 24 der Querträgerabschnitte 20 durch in Querträgerrichtung unidirektional verlaufende Faserstränge verstärkt sind. Aufgrund dieser Bauweise bewirkt die Mittelstruktur 16, die im Bereich der Querträgerabschnitte 20 auf die weiter unten erläuterte Weise fest mit den Längsträgern 4 verbunden ist, eine sehr torsionsweiche und biegesteife und zugleich in Drehgestellebene hochgradig schubsteife, gegenseitige Verkoppelung der Längsträger 4.

Im Bereich des mittleren Plattenabschnitts 18 ist die Mittelstruktur 16 mit einer zentralen Aussparung 26 zur Aufnahme der Drehzapfenanordnung sowie seitlich davon mit Durchbrüchen 28 versehen, an denen die aus der Wagenkastenanlenkung resultierenden, in Drehgestellebene wirkenden Querkräfte über Querpuffer und Dämpfer (nicht gezeigt) eingeleitet werden.

Weitere Lasteinleitungsstellen in Form von Elastomerlagern 30, an denen die in Fig. 1 gestrichelt dargestellten Lemniskatenlenker für die Wagenkastenanlenkung in Drehgestell-Längsrichtung gelagert sind, befinden sich im Hohlprofilinneren der Querträgerabschnitte 20.

Ferner sind an der Mittelstruktur 16 die mit den Bremsscheiben 32 der Radsätze 8, 10 zusammenwirkenden Scheibenbremsvorrichtungen 34 über Bremsträger 36 befestigt, die jeweils an die längsträgerseitigen Endbereiche der Querträgerabschnitte 20 angeschlossen, z. B. mit diesen verschraubt sind. Zur Aufnahme der durch die Bremskräfte verursachten, über die Bremsträger 36 eingeleiteten Torsionsmomente sind die Querträgerabschnitte 20 in dem relativ kurzen Endbereich zwischen Bremsträger 36 und Verbindungsstelle zum Längsträger 4 jeweils durch im Querschnitt geschlossene, torsionssteif in Faserverbundbauweise ausgebildete Hohlprofilstücke 38 verstärkt, die eine der C-Profilform der Querträgerabschnitte 20 entsprechende Querschnittskonfiguration besitzen und mit diesen fest verbunden, z. B. verschraubt und/oder verklebt sind. Durch die Profilstücke 38 wird die Torsionssteifigkeit der Mittelstruktur 16 nur im Endbereich der Querträgerabschnitte 20 auf ein zur Übertragung der über die Bremsträger 36 eingeleiteten Bremsmomente ausreichendes Maß erhöht, während die Querträgerabschnitte 20 ihre offene C-Profilform und somit ihre geringe Torsionssteifigkeit über den größten Teil ihrer Länge beibehalten, so daß die Verwindungsweichheit der Mittelstruktur 16 trotz ausreichend sicherer Fixierung der Scheibenbremsvorrichtungen 34 im wesentlichen nicht beeinträchtigt wird. Bei mehr als zwei Scheibenbremsen 34 je Radsatz 8 bzw. 10 werden auch diese über die beiden endseitigen Bremsträger 36 an der Mittelstruktur 16 abgestützt.

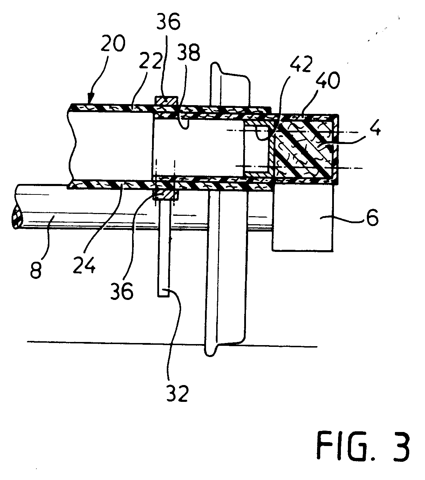

Die Befestigung der Mittelstruktur 16 an den Längsträgern 4 im Bereich der Querträgerabschnitte 20 erfolgt einerseits durch eine formschlüssige Verbindung mittels schlaufenförmig über die Querträgerenden vorstehender Wandabschnitte 40, die die Längsträger 4 querschnittskonform umschließen und als einstückige Fortsätze der Faserverbund-Profilstücke 38 ausgebildet sind (Fig. 3), und andererseits durch Schraubverbindungen 42, 44, die jeweils aus einem innenseitig am Ende der Profilstücke 38 befestigten, topfförmigen Metallbeschlag 42 und entsprechenden Befestigungsschrauben 44 bestehen.

Zur Herstellung des Drehgestellrahmens 2 werden die Längsträger 4, die Mittelstruktur 16 und die Hohlprofilstücke 38 einschließlich ihrer laschenförmigen Wandabschnitte 40 jeweils einzeln aus Faserverbundwerkstoff vorgefertigt und ausgehärtet und anschließend die Profilstücke 38 von den verjüngten Enden der Längsträger 4 aus auf diese aufgeschoben und mittels der Metallbeschläge 42 und Verbindungsschrauben 44 in der Einbaulage befestigt, woraufhin die Mittelstruktur 16 auf die Profilstücke 38 aufgesteckt und mit diesen und den Metallbeschlägen 42 fest verbunden, z. B. verschraubt wird. Wie aus Fig. 2 ersichtlich, befindet sich der ebene Plattenabschnitt 18 der Mittelstruktur 16 in der Einbaulage im wesentlichen in Höhe der neutralen Biegelinie N-N der Längsträger 4.

Der so zusammengebaute Drehgestellrahmen 2 wird durch Montage der übrigen Baukomponenten, wie Scheibenbremsen, Radsatzlager. Elastomerlager usw., zum fertigen Drehgestell komplettiert.

## Patentansprüche

1. Drehgestell für ein Schienenfahrzeug, mit einem Drehgestellrahmen (2) in Faserverbundbauweise, bestehend aus zwei an ihren Enden die Radsatzachsen (8, 10) lagernden Längsträgern (4), die im Bereich zwischen den Radsätzen durch einen vorderen und einen hinteren Querträger (20) und ein zwischen den Querträgern (20) angeordnetes, als Rahmenversteifungselement in Drehgestellebene wirkendes Plattenteil (18) schubsteif, aber torsionsweich miteinander verkoppelt sind,
dadurch **gekennzeichnet,** daß
der vordere und der hintere Querträger (20) und das Plattenteil (18) längsträgerunabhängig miteinander schubkraftübertragend zu einer in den Querträgerbereichen (20) an den Längsträgern (4) befestigten Faserverbund-Mittelstruktur (16) verbunden sind.

2. Drehgestell nach Anspruch 1,
dadurch **gekennzeichnet,** daß
die Mittelstruktur (16) als Integralbauteil mit sich durchgehend von dem Platten (18) - zu den Querträgerabschnitten (20) erstreckenden Faserlagen ausgebildet ist.

3. Drehgestell nach Anspruch 1 oder 2,
dadurch **gekennzeichnet,** daß
jeder Querträgerabschnitt (20) der Mittelstruktur (16) als C-förmig zum jeweils anderen Querträgerabschnitt hin geöffnetes Faserverbund-Hohlprofil ausgebildet ist.

4. Drehgestell nach einem der vorhergehenden Ansprüche,
dadurch **gekennzeichnet,** daß
die Mittelstruktur (16) aus ± 45°-Faserlagen aufgebaut ist, die in den Ober- und Untergurtbereichen (22, 24) der Querträgerabschnitte (20) durch unidirektional in Querträgerrichtung verlaufende Faserstränge verstärkt sind.

5. Drehgestell nach einem der vorhergehenden Ansprüche,
dadurch **gekennzeichnet,** daß
die Mittelstruktur (16) im Bereich der Querträgerabschnitte (20) mit Lasteinleitungsstellen (30) für die horizontale Längsabstützung des Wagenkastens und im Bereich des Plattenabschnitts (18) mit Lasteinleitungsstellen (28) für die horizontale Querabstützung des Wagenkastens versehen ist.

6. Drehgestell nach den Ansprüchen 3 und 5,
dadurch **gekennzeichnet,** daß
die Lasteinleitungsstellen (30) für die Längsabstützung im Hohlprofilinneren der C-förmigen Querträgerabschnitte (20) angeordnet sind.

7. Drehgestell nach einem der vorhergehenden Ansprüche,
dadurch **gekennzeichnet,** daß
die Mittelstruktur (16) mit den Längsträgern (4) im Bereich der Querträgerabschnitte (20) einerseits über metallische Beschläge (42) verschraubt und andererseits durch endseitig über die Querträgerabschnitte vorstehende, die Längsträger umgreifende Wandabschnitte (40) formschlüssig verbunden ist.

8. Drehgestell nach einem der vorhergehenden Ansprüche,
dadurch **gekennzeichnet,** daß
der Plattenabschnitt (18) der Mittelstruktur (16) horizontal im wesentlichen in Höhe der neutralen Biegelinie (N) der Längsträger (4) angeordnet ist.

9. Drehgestell nach einem der vorhergehenden Ansprüche,
dadurch **gekennzeichnet,** daß
die Querträgerabschnitte (20) der Mittelstruktur (16) in ihren längsträgerseitigen Endbereichen torsionssteif ausgebildet und mit Bremsträgern (36) für die Bremsvorrichtungen (34) versehen sind.

10. Drehgestell nach Anspruch 9,
dadurch **gekennzeichnet,** daß
die Querträgerendbereiche der Mittelstruktur (16) ein im Querschnitt geschlossenes Hohlprofil (38) besitzen.

## Claims

1. Bogie for a rail vehicle, having a bogie frame (2) of fibre-composite construction, comprising two longitudinal supports (4), which have the axles of a set of wheels (8, 10) mounted on their ends and which are in the area between the sets of wheels interconnected so as to have shearing rigidity whilst being torsionally resilient by means of a front and a rear transverse support (20) and a plate element (18), which is arranged between the transverse elements (20) and serves as a frame reinforcing element in the bogie plane, **characterised in that** the front and the rear transverse support (20) and the plate element (18) are interconnected independent of the longitudinal support and transmitting thrust forces, to form a fibre-composite central structure (16) which is in the transverse support areas (20) attached to the longitudinal supports (4).

2. Bogie according to claim 1, **characterised in that** the central structure (16) is arranged as an integral component with continuous fibrous layers extending from the plate (18) to the cross-sectional sections (20).

3. Bogie according to claim 1 or 2, **characterised in that** each transverse support section (20) of the central structure (16) is arranged as a fibre-composite hollow profile which is an open C-shape relative to the other transverse support section.

4. Bogie according to one of the above claims, **characterized in that** the central structure (16) is composed of ±45° fibrous layers, which are in the upper and lower belt regions (22, 24) of the transverse support sections (20) reinforced by fibrous strands extending unidirectionally in the transverse support direction.

5. Bogie according to one of the above claims, **characterised in that** the central structure (16) is provided in the area of the transverse support sections (20) with load-introduction locations (30) for the horizontal longitudinal support of the vehicle box, and in the area of the plate section (18) with load-introduction locations (28) for the horizontal transverse support of the vehicle box.

6. Bogie according to claims 3 and 5, **characterised in that** the load-introduction locations (19) for the longitudinal support are arranged inside the hollow profile of the C-shaped transverse support sections (20).

7. Bogie according to one of the above claims, **characterised in that** the central structure 16 is on the one side bolted to the longitudinal supports (4) in the area of the transverse support sections (20) and on the other side positively connected by wall sections (40), which at the end protrude over the transverse support sections and which reach around the longitudinal supports.

8. Bogie according to one of the above claims, **characterised in that** the plate section (18) of the central structure (16) is arranged horizontally and substantially at the height of the neutral flexural line (N) of the longitudinal supports (4).

9. Bogie according to one of the above claims, **characterised in that** the transverse support sections (20) of the central structure (16) are in their end regions facing towards the longitudinal supports arranged to be torsionally rigid and are provided with brake carriers (36) for the breaking devices (34).

10. Bogie according to claim 9, **characterised in that** the areas of the transverse support ends of the central structure (16) have a cross-sectionally closed hollow profile (38).

## Revendications

1. Bogie pour un véhicule sur rails, comprenant un châssis (2) de construction composite renforcée par fibres composé de deux longerons (4) qui supportent à leurs extrémités les axes d'essieu (8, 10) et qui, dans la zone entre les essieux montés, sont accouplés de manière à être résistants au cisaillement mais souples en torsion, par une traverse avant (20) et une traverse arrière (20) et une plaque (18) disposée entre les traverses (20) et agissant comme élément de renforcement du châssis dans le plan du bogie, **caractérisé** par le fait que les traverses (20) avant et arrière et la plaque (18) sont reliées entre elles indépendamment des longerons et de manière à transmettre les efforts de cisaillement, en une structure centrale (16) composite renforcée par fibres, qui est fixée dans la zone des traverses (20) sur les longerons (4).

2. Bogie selon la revendication 1, **caractérisé** par le fait que la structure centrale (16) est réalisée sous forme d'élément monobloc avec des couches de fibres s'étendant en continu de la plaque (18) aux traverses (20).

3. Bogie selon la revendication 1 ou 2, **caractérisé** par le fait que chaque traverse (20) de la structure centrale (16) est réalisée sous forme de profilé creux composite renforcé par fibres en forme de C qui est ouvert en direction de l'autre traverse.

4. Bogie selon l'une des revendications précédentes, **caractérisé** par le fait que la structure centrale (16) est composée de couches de fibres à ± 45° qui sont renforcées dans la zone des membrures supérieure (22) et inférieure (24) des traverses (20), par des faisceaux de fibres unidirectionnels s'étendant dans la direction des traverses.

5. Bogie selon l'une des revendications précédentes, **caractérisé** par le fait que la structure centrale (16) est munie dans la zone des traverses (20) de points d'application de charge (30) pour l'appui longitudinal horizontal de la caisse de voiture et dans la zone de la plaque (18) de points d'application de charge (28) pour l'appui transversal horizontal de la caisse de voiture.

6. Bogie selon les revendications 3 et 5, **caractérisé** par le fait que les points d'application de charge (30) pour l'appui longitudinal sont disposés à l'intérieur du profil creux des traverses (20) en forme de C.

7. Bogie selon l'une des revendications précédentes, **caractérisé** par le fait que la structure centrale (16) est d'une part assemblée par vis avec les longerons (4) dans la zone des traverses (20) par l'intermédiaire de ferrures (42) métalliques et est d'autre part reliée par complémentarité de formes auxdits longerons par des parties de paroi (40) qui font saillie à l'extrémité des traverses et entourent les longerons.

8. Bogie selon l'une des revendications précédentes, **caractérisé** par le fait que la plaque (18) de la structure centrale (16) est disposée horizontalement, sensiblement à la hauteur de la ligne de flexion neutre (N) des longerons (4).

9. Bogie selon l'une des revendications précédentes, **caractérisé** par le fait que les traverses (20) de la structure centrale (16) sont rigides en torsion dans leurs zones terminales côté longerons et sont équipées de supports de frein (36) pour les dispositifs de freinage (34).

10. Bogie selon la revendication 9, **caractérisé** par le fait que les zones terminales des traverses de la structure centrale (16) possèdent un profilé creux (38) fermé en coupe transversale.
